# EUROPEAN PATENT APPLICATION

(11) **EP 4 716 302 A1**
(43) Date of publication of application: **25.03.2026**
(21) Application number: 24830208.5
(22) Date of filing: 14.05.2024
(51) Int. Cl.: H04W 36/00

(54) **EVENT MONITORING METHOD AND APPARATUS, ELECTRONIC DEVICE, AND STORAGE MEDIUM**

(30) Priority: 26.06.2023 CN 202310762149
(71) Applicant: ZTE CORPORATION, Shenzhen, Guangdong 518057 (CN)
(72) Inventor: YANG, Xiaoli, Shenzhen, Guangdong 518057 (CN)
(74) Representative: Canzler & Bergmeier Patentanwälte Partnerschaft mbB
(86) International application number: PCT/CN2024/093078
(87) International publication number: WO 2025/001560

(57) **Abstract**

Embodiments of the present application relate to an event monitoring method and apparatus, an electronic device, and a storage medium. The method comprises: determining whether a user equipment accesses a 5G network; when it is determined that the user equipment accesses the 5G network, triggering a first subscription request, wherein the first subscription request carries a network switching monitoring event; determining whether the user equipment has performed target network switching, wherein the target network switching indicates that the user equipment switches from a 4G network to the 5G network; and when the user equipment has performed the target network switching, triggering a second subscription request, and when event information corresponding to the second subscription request is detected, sending the event information corresponding to the second subscription request to the user equipment.

## Description

### CROSS-REFERENCE TO RELATED APPLICATIONS

This patent application claims priority to Chinese patent application No. 202310762149.2 filed with the China National Intellectual Property Administration on June 26, 2023, the disclosure of which is incorporated herein by reference in its entirety.

### TECHNICAL FIELD

The present disclosure relates to the field of computer technology, and particularly relates to an event monitoring method and apparatus, an electronic device, and a storage medium.

### BACKGROUND

Currently, in a scenario of switching between 4G and 5G networks, when a user equipment (UE) is switched from 4G to 5G, there may be no subscription information at an access and mobility management function (AMF) side in some cases, or the subscription information is inaccurate, and therefore, it is necessary to re-synchronize the subscription information with the AMF. For example, when the user switches from 4G to 5G for the first time, or switches from 5G to 4G, the AMF clears local subscription records, so the AMF side may not have event information corresponding to a subscription request.

### SUMMARY

In view of this and to solve some or all of the above technical problems, embodiments of the present disclosure provide an event monitoring method and apparatus, an electronic device, and a storage medium.

In a first aspect, an embodiment of the present disclosure provides an event monitoring method, including: determining whether a user equipment accesses a 5G network; triggering a first subscription request when it is determined that the user equipment accesses the 5G network, wherein the first subscription request carries a network switching monitoring event; determining whether the user equipment has performed target network switching, wherein the target network switching indicates that the user equipment switches from a 4G network to the 5G network; and triggering a second subscription request when the user equipment has performed the target network switching, and sending, when event information corresponding to the second subscription request is detected, the event information to the user equipment.

In one possible implementation, before determining whether the user equipment has performed target network switching, the method further includes: determining registration information of the user equipment, and determining whether the user equipment has performed target network switching includes: determining, based on the registration information, whether the user equipment has performed target network switching.

In one possible implementation, determining registration information of the user equipment includes: receiving a location update request of the user equipment; storing 4G registration information corresponding to the location update request; receiving a 5G registration request of the user equipment; storing 5G registration information corresponding to the 5G registration request, and determining, based on the registration information, whether the user equipment has performed target network switching includes: determining, based on the 4G registration information and the 5G registration information, whether the user equipment has performed target network switching.

In one possible implementation, determining, based on the 4G registration information and the 5G registration information, whether the user equipment has performed target network switching includes: determining whether a first saving moment is before a second saving moment to obtain judgment information, wherein the first saving moment is a saving moment of the 4G registration information, and the second saving moment is a saving moment of the 5G registration information; and under a condition that the judgment information indicates that the first saving moment is before the second saving moment, determining that the user equipment has performed target network switching.

In one possible implementation, the 4G registration information and the 5G registration information are stored with a first network element, and under a condition that the user equipment has performed the target network switching, the method further includes: controlling the first network element to send a notification message to a second network element, wherein the notification message carries information indicating that the user equipment has switched from the 4G network to the 5G network; and controlling the second network element to return a success response message for the notification message to the first network element.

In one possible implementation, triggering the second subscription request includes: controlling the second network element to trigger the second subscription request, wherein the second subscription request carries an event monitored in the 4G network; controlling the second network element to send the second subscription request to the first network element; and after the first network element forwards the second subscription request to a third network element, receiving a success response message returned from the third network element for the second subscription request.

In one possible implementation, sending the event information corresponding to the second subscription request to the user equipment includes: controlling a third network element to detect event information corresponding to the second subscription request; storing the event information in the third network element; and controlling the third network element to notify the user equipment of the event information.

In a second aspect, an embodiment of the present disclosure further provides an event monitoring apparatus, including: a first determination unit configured to determine whether a user equipment accesses a 5G network; a first triggering unit configured to trigger a first subscription request when it is determined that the user equipment accesses the 5G network, wherein the first subscription request carries a network switching monitoring event; a second determination unit configured to determine whether the user equipment has performed target network switching, wherein the target network switching indicates that the user equipment switches from a 4G network to the 5G network; and a second triggering unit configured to trigger a second subscription request when the user equipment has performed the target network switching, and send, when event information corresponding to the second subscription request is detected, the event information to the user equipment.

In a third aspect, an embodiment of the present disclosure further provides an electronic device, including: a memory configured to store a computer program; a processor configured to execute the computer program stored in the memory to implement the method according to any embodiment of the event monitoring method in the first aspect of the present disclosure.

In a fourth aspect, an embodiment of the present disclosure further provides a computer-readable storage medium having a computer program stored thereon which, when executed by a processor, causes the method according to any embodiment of the event monitoring method in the first aspect to be implemented.

In a fifth aspect, an embodiment of the present disclosure provides a computer program including computer-readable codes which, when executed on a device, cause a processor in the device to implement the method according to any embodiment of the event monitoring method in the first aspect.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.

To illustrate the technical solutions in the embodiments of the present disclosure or the existing art more clearly, the drawings to be used in description of the embodiments or the existing art will be briefly described below. Apparently, other drawings may be derived from these drawings by those of ordinary skill in the art without any creative labor.

One or more embodiments are illustrated through corresponding figures in the accompanying drawings, but such illustration does not constitute any limitation to the embodiments. Throughout the drawings, elements having like reference numerals represent like elements, and the drawings are not to be construed as limiting in scale unless otherwise specified.
FIG. 1 is a schematic flowchart of an event monitoring method according to an embodiment of the present disclosure;
FIG. 2 is a schematic flowchart of an event monitoring method according to another embodiment of the present disclosure;
FIG. 3A is a block diagram involved in an event monitoring method according to an embodiment of the present disclosure;
FIG. 3B is a schematic diagram of network element interaction involved in an event monitoring method according to an embodiment of the present disclosure;
FIG. 4 is a schematic structural diagram of an event monitoring apparatus according to an embodiment of the present disclosure; and
FIG. 5 is a schematic structural diagram of an electronic device according to an embodiment of the present disclosure.

### DETAIL DESCRIPTION OF EMBODIMENTS

Various exemplary embodiments of the present disclosure will now be described in detail with reference to the accompanying drawings, and it is apparent that the described embodiments are a part, but not all, of the embodiments of the disclosure. It should be noted that: the relative arrangement of parts and operations, numerical expressions and numerical values set forth in the embodiments do not limit the scope of the present disclosure, unless specifically stated otherwise.

It will be understood by those skilled in the art that the terms "first", "second", and the like in the embodiments of the present disclosure are used only for distinguishing between different operations, devices, or modules, and do not denote any particular technical meaning or order therebetween.

It should also be understood that in the present embodiment, "a plurality" may mean two or more, and "at least one" may mean one, two or more.

It is also to be understood that any reference to any component, data, or structure in the embodiments of the present disclosure may be generally understood as one or more, unless explicitly defined otherwise or indicated to the contrary hereinafter.

In addition, the term "and/or" in the present disclosure is used merely to describe an association relationship of associated objects, which may include three relationships; for example, A and /or B may refer to: A alone, A and B, or B alone. In addition, the character "/" in the present disclosure generally indicates that the former and latter associated objects are in an "or" relationship.

It should also be understood that the description of various embodiments in the present disclosure emphasizes the differences between the embodiments, and the same or similar parts may be referred to each other, and are not repeated for brevity.

The following description of at least one exemplary embodiment is merely illustrative in nature and is in no way intended to limit the present disclosure or applications or uses thereof.

Techniques, methods, and apparatuses known to one of ordinary skill in the existing art may not be discussed in detail but are intended to be part of the specification where appropriate.

It should be noted that: like reference numbers and letters refer to like items in the following figures, and thus, once an item is defined in one figure, it need not be discussed further in subsequent figures.

It should be noted that the embodiments of the present disclosure and features therein may be combined with each other in any manner as long as they are not contradictory. To facilitate understanding of the embodiments of the present disclosure, the present disclosure will be described in detail below with reference to the accompanying drawings in conjunction with embodiments. Apparently, the described embodiments are some, but not all, of the embodiments of the present disclosure. All other embodiments obtained by the ordinarily skilled in the art based on the embodiments of the present disclosure without paying any creative effort shall be included in the protection scope of the present disclosure.

To solve the technical problem of how to improve the sending accuracy of event information by a user equipment in the related art, the present disclosure provides an event monitoring method, which can improve the sending accuracy of event information by a user equipment.

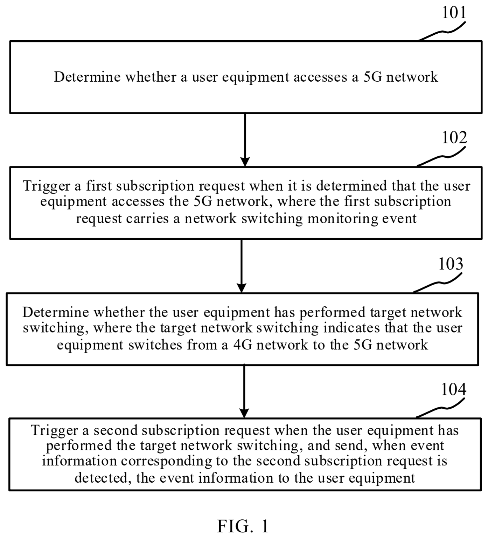

FIG. 1 is a schematic flowchart of an event monitoring method according to an embodiment of the present disclosure. This method may be applied to one or more electronic devices such as smartphones, laptops, desktop computers, portable computers, servers, and the like. In addition, the executor of the method may be hardware or software. When the executor is hardware, the executor may be one or more of the electronic devices listed above. For example, the method may be performed by a single electronic device, or by a plurality of electronic devices in cooperation with each other. When the executor is software, the method may be implemented in a plurality of software or software modules, or may be implemented in a single software or software module. This is not particularly limited here.

As shown in FIG. 1, the method includes the following operations 101 to 104.

At operation 101, determining whether a user equipment accesses a 5G network.

In this embodiment, the user equipment may be any device having a function of connecting to 4G and 5G networks.

At operation 102, triggering a first subscription request when it is determined that the user equipment accesses the 5G network, where the first subscription request carries a network switching monitoring event.

In this embodiment, once the user equipment accesses the 5G network, a first subscription request carrying a network switching (CN type change) monitoring event may be triggered to monitor whether the user equipment has performed network switching.

At operation 103, determining whether the user equipment has performed target network switching, where the target network switching indicates that the user equipment switches from a 4G network to the 5G network.

In this embodiment, since the subscription request carrying the network switching monitoring event (i.e. the first subscription request) is triggered in operation 102, whether the user equipment has switched from the 4G network to the 5G network can be determined.

At operation 104, triggering a second subscription request when the user equipment has performed the target network switching, and sending, when event information corresponding to the second subscription request is detected, the event information to the user equipment.

In this embodiment, after the user equipment switches from the 4G network to the 5G network, a second subscription request may be triggered. After that, if event information corresponding to the second subscription request is detected, the event information corresponding to the second subscription request may be sent to the user equipment.

Furthermore, the above operations 101 to 104 may be performed via one or more network elements in the 5G core network. In this embodiment, the specific network element performing the above operations 101 to 104 is not limited, and in practice, the network element performing the above operations may be determined according to specific needs.

In some optional implementations of this embodiment, the event information corresponding to the second subscription request may be sent to the user equipment by the following three operations.

A first operation, controlling a third network element to detect event information corresponding to the second subscription request.

The third network element may include an access and mobility management function (AMF). As an example, the third network element may be configured to detect and report some events.

In addition, the third network element may support UEs with different mobility management requirements. The AMF network element may perform main tasks including: non-access stratum (NAS) signaling terminals, NAS signaling security, access stratum security control, inter-core network node signaling for mobility between 3GPP access networks, idle mode UE reachability (including control and execution of paging retransmissions), registration area management, support for intra-system and inter-system mobility, access authentication, access authorization, etc.

A second operation, storing the event information in the third network element.

A third operation, controlling the third network element to notify the user equipment of the event information.

It is to be understood that in the foregoing optional implementation, the third network element may be configured to detect and store event information corresponding to the second subscription request. Upon receiving a unified data management (UDM) subscription request, the third network element may store the subscription information and notify the user equipment of the event information. In this manner, the accuracy of sending the event information corresponding to the second subscription request to the user equipment is increased.

The event monitoring method provided in the embodiment of the present disclosure can determine whether a user equipment accesses a 5G network; then a first subscription request is triggered when it is determined that the user equipment accesses the 5G network, where the first subscription request carries a network switching monitoring event; then whether the user equipment has performed target network switching is determined, where the target network switching indicates that the user equipment switches from a 4G network to the 5G network; and then a second subscription request is triggered when the user equipment has performed the target network switching, and when event information corresponding to the second subscription request is detected, the event information is sent to the user equipment. Therefore, a network switching event can be monitored under a condition that the user equipment accesses the 5G network, and then if it is monitored that the user equipment has switched from the 4G network to the 5G network, the subscription request is re-triggered through the 5G network, and then event information corresponding to the re-triggered subscription request can be sent to the user equipment. In this manner, the accuracy of sending event information to the user equipment when the user equipment switches from a 4G network to a 5G network can be improved.

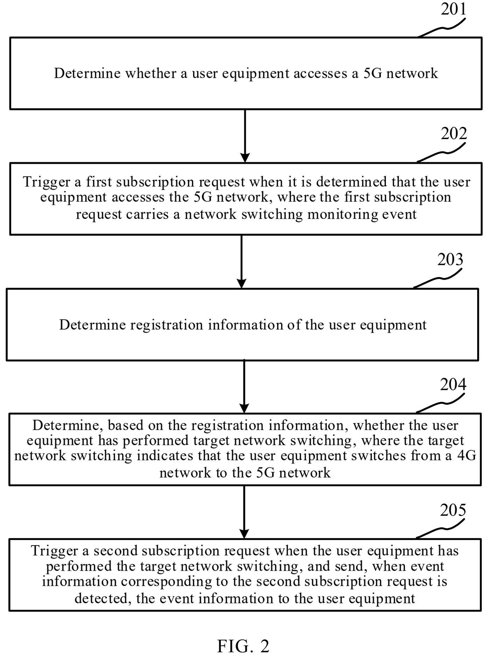

FIG. 2 is a schematic flowchart of an event monitoring method according to another embodiment of the present disclosure. As shown in FIG. 2, the method specifically includes the following operations 201 to 205.

At operation 201, determining whether a user equipment accesses a 5G network.

In this embodiment, operation 201 is substantially the same as operation 101 in FIG. 1, and thus is not repeated here.

At operation 202, triggering a first subscription request when it is determined that the user equipment accesses the 5G network, where the first subscription request carries a network switching monitoring event.

In this embodiment, operation 202 is substantially the same as operation 102 in FIG. 1, and thus is not repeated here.

At operation 203, determining registration information of the user equipment.

In this embodiment, the registration information may include location information of the user equipment.

At operation 204, determining, based on the registration information, whether the user equipment has performed target network switching, where the target network switching indicates that the user equipment switches from a 4G network to the 5G network.

In this embodiment, based on the location information of the user equipment contained in the registration information, it may be determined whether the connected network to the user equipment is switched from the 4G network to the 5G network, thereby determining whether the user equipment switches from the 4G network to the 5G network.

At operation 205, triggering a second subscription request when the user equipment has performed the target network switching, and sending, when event information corresponding to the second subscription request is detected, the event information to the user equipment.

In this embodiment, operation 205 is substantially the same as operation 104 in FIG. 1, and thus is not repeated here.

In some optional implementations of this embodiment, the registration information of the user equipment may be determined by the following four operations.

A first operation, receiving a location update request of the user equipment.

A second operation, storing 4G registration information corresponding to the location update request.

A third operation, receiving a 5G registration request of the user equipment.

A fourth operation, storing 5G registration information corresponding to the 5G registration request.

On this basis, whether the user equipment has performed target network switching may be determined based on the registration information by: determining, based on the 4G registration information and the 5G registration information, whether the user equipment has performed target network switching.

It is to be understood that in the foregoing optional implementation, the UE may initiate an Update_Location_Request (i.e., a location update request) to a home subscriber server (HSS)+UDM through a mobility management entity (MME); then the HSS+UDM returns a success response message to the MME and stores 4G registration information; then the AMF may trigger a registration request to the HSS+UDM through a Nudm_UEContextManagement_Registration interface, and the HSS+UDM returns a success response message to the AMF and stores 5G registration information; and finally, the HSS+UDM determines that the UE switches from 4G to 5G based on a registration information state locally stored. In this way, whether the user equipment switches from the 4G network to the 5G network can be judged based on the 4G registration information and the 5G registration information, thereby increasing the accuracy of determining whether the user equipment switches from the 4G network to the 5G network.

In some application scenarios in the foregoing optional implementation, whether the user equipment has performed target network switching may be determined based on the 4G registration information and the 5G registration information by the following two operations.

A first operation, determining whether a first saving moment is before a second saving moment to obtain judgment information.

The first saving moment is a saving moment of the 4G registration information, and the second saving moment is a saving moment of the 5G registration information. In addition, there is no other saving moment of other registration information (including 4G registration information and 5G registration information) between the first saving moment and the second saving moment.

The judgment information indicates whether the first saving moment is before the second saving moment.

A second operation, under a condition that the judgment information indicates that the first saving moment is before the second saving moment, determining that the user equipment has performed target network switching.

It is to be understood that in the above application scenario, the saving moment of the 4G registration information and the saving moment of the 5G registration information are compared to determine whether the user equipment switches from the 4G network to the 5G network, thereby increasing the accuracy of determining whether the user equipment switches from the 4G network to the 5G network.

In some application scenarios in the foregoing optional implementation, the 4G registration information and the 5G registration information are stored with a first network element.

The first network element may include an HSS and UDM, i.e., the converged network element described above. Here, the UDM may be configured to manage registration, forward event monitoring subscription and detect and report some subscription events, and correspond to an HSS function entity in an evolved packet system (EPS) network. The HSS may be configured for registration management and event monitoring in the EPS network.

On this basis, the user equipment may further perform the following two operations under a condition that the target network switching is performed.

A first operation, controlling the first network element to send a notification message to a second network element.

The notification message carries information indicating that the user equipment has switched from the 4G network to the 5G network.

The second network element may include a network exposure function (NEF). As an example, the second network element may be configured to provide an open interface and open data, such as a state, a location, a periodic update time, a machine-card binding state, policy control, a quality of service (QoS) capability, and the like of a terminal, for an external vendor (such as an AF). Here, the AF refers to various services in the application layer.

A second operation, controlling the second network element to return a success response message for the notification message to the first network element.

It is to be understood that in the above application scenario, the first network element (e.g., UDM) may trigger a notification message to the second network element (e.g., NEF) via a network element interface (e.g., Nudm_EventExposure_Notify), where the carried notification message indicates a UE state of switching from 4G to 5G, so that the UE switching from the 4G network to the 5G network can be determined more timely in the form of a notification message.

In some cases of the above application scenario, the second subscription request may be triggered by the following three operations.

A first operation, controlling the second network element to trigger the second subscription request.

The second subscription request carries an event monitored in the 4G network.

The second network element may include an NEF.

A second operation, controlling the second network element to send the second subscription request to the first network element.

The first network element may include an HSS and a UDM.

A third operation, after the first network element forwards the second subscription request to a third network element, receiving a success response message returned from the third network element for the second subscription request.

The third network element may include an AMF.

It is to be understood that in the above case, the second network element (e.g., NEF) may determine, based on the UE state of switching from 4G to 5G carried in the notification from the first network element (e.g., HSS or UDM), that the subscription request (i.e., the second subscription request) needs to be re-triggered, where the second network element acquires all subscription information locally stored, and re-triggers the subscription request to the first network element. The first network element determines a subscription event carried by the second subscription request, which may be detected by the third network element, and the first network element forwards the subscription request to the third network element and stores the subscription information.

It should be noted that in addition to the above contents, this embodiment may further include corresponding technical features described with reference to FIG. 1, to further achieve the technical effects of the event monitoring method shown in FIG. 1, for which reference may be made to related description of FIG. 1, and which, for brevity, are not repeated here.

According to the event monitoring method provided in the embodiment of the present disclosure, whether the user equipment switches from the 4G network to the 5G network is determined based on the registration information of the user equipment, so that the accuracy of determining whether the user equipment switches from the 4G network to the 5G network can be increased.

Embodiments of the present disclosure are illustrated below, but it should be noted that the embodiments of the present disclosure may have the features described below, but the following description does not form any limitation to the scope of the embodiments of the present disclosure.

Currently, when a UE moves from an EPS to a 5G system (5GS), related solutions typically require complete subscription information at the UDM side. Scenarios without complete information at the UDM side are not considered, which include: a scenario where no subscription information is present at the UDM when the UE switches to a 5GS domain for the first time, or where aged subscription records stored at the UDM side are cleared in a switching process, and the like. In addition, the related solutions can take effect only on the premise that both the UDM and the AMF support new attributes, involving high implementation complexity. The problem cannot be solved for a scenario where only some of the points support new attributes. In addition, the related solutions require complete subscription information (i.e., event information corresponding to the subscription request) stored at the UDM side, involving high UDM storage overhead. Since some subscription information is maintained through message interaction between the AMF and the NEF (e.g., a maximum number of reports (maxNumOfReports information), and the UDM cannot sense a change, the problem of inaccurate event information tends to occur if UDM local data is directly used for synchronization.

In practice, with the automatic use of the internet of things terminal, frequent monitoring of the internet of things terminal is required, and an operator needs to quickly sense a state change of the device and make a timely response to improve the user experience, such as vehicle abnormal connection fault tracking. The internet of things terminal in use may enter a 4G and 5G switching scenario, in which it needs to ensure that the event monitoring function is not affected.

To solve the above problem, the method may adopt the following five operations.

In a first operation, a network exposure function (NEF, i.e., the second network element) subscribes to a CN type change event (i.e., the network switching monitoring event) from unified data management (UDM, i.e., the first network element).

In a second operation, the UDM detects a UE (i.e., the user equipment described above) switching state and informs the NEF.

In a third operation, the NEF receives the UE state switching to 5G, and re-triggers the subscription request (i.e., the second subscription request) to the UDM.

In a fourth operation, the UDM receives and forwards the subscription request (i.e., the second subscription request described above) to an AMF.

In a fifth operation, the AMF (i.e., the third network element) stores the latest subscription information (i.e., the event information), and detects a corresponding event change.

In this manner, the method can ensure validity of the AMF subscription records.

Specifically, the method may be performed as follows.

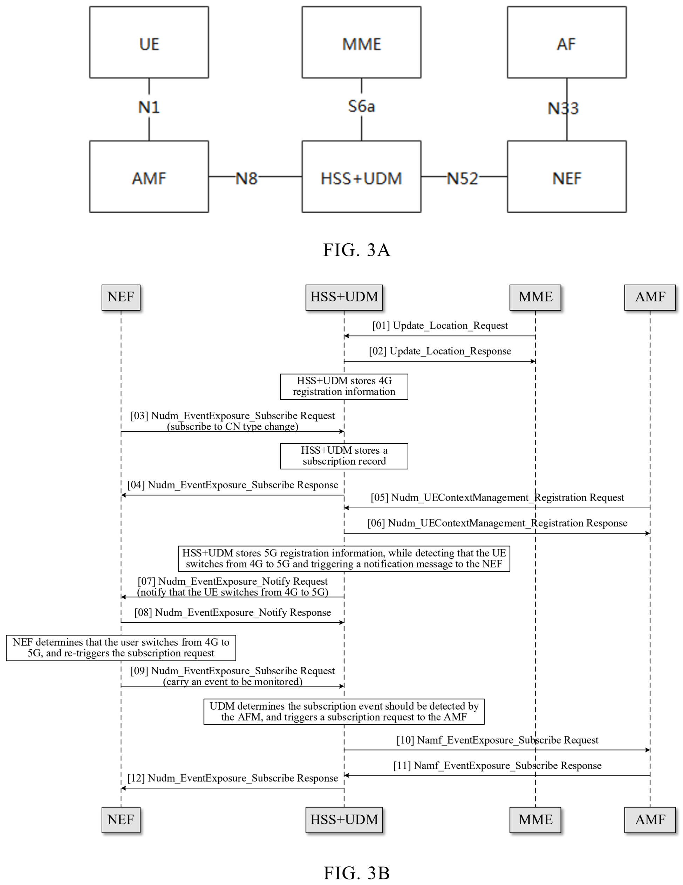

FIG. 3A is a block diagram involved in an event monitoring method according to an embodiment of the present disclosure. FIG. 3B is a schematic diagram of network element interaction involved in an event monitoring method according to an embodiment of the present disclosure.

Referring to FIGs. 3A and 3B, the following process is performed.
1. A UE initiates an Update_Location_Request (location update request) to an HSS+UDM (converged network element) through an MME to perform a 4G registration procedure.
2. The HSS+UDM returns a success response message to the MME, and stores the 4G registration information.
3. The NEF triggers a subscription request carrying the monitoring event of CN type change to the HSS+UDM via a Nudm_EventExposure_Subscribe interface. The Nudm_EventExposure_Subscribe interface is configured to provide an AMF event subscription function.
4. The HSS+UDM stores a subscription record for subsequent reporting and notification, and returns a success response to the NEF.
5. The AMF triggers a registration request to the HSS+UDM through a Nudm_UEContextManagement_Registration interface, to perform a 5G registration procedure.
6. The HSS+UDM returns a success response message to the AMF, and stores 5G registration information.
7. The HSS+UDM determines that the UE switches from 4G to 5G based on a registration information state locally stored, and the UDM triggers a notification message, carrying a UE state switching from 4G to 5G, to the NEF via a Nudm_EventExposure_Notify interface.
8. The NEF returns a success response message to the HSS+UDM.
9. Based on the UE state carried in the notification from the HSS+UDM, the NEF determines that the user equipment switches from 4G to 5G, so that the subscription request is re-triggered, where the NEF acquires all subscription information locally stored, and re-triggers the subscription request (i.e., the second subscription request) to the UDM.
10. The UDM determines the subscription event carried by the subscription request from the NEF should be detected by the AFM, so that the UDM forwards the subscription request to the AMF and stores the subscription information.
11. Upon receiving the UDM subscription request, the AMF stores the subscription information, and returns a subscription success response message to the UDM.
12. The UDM returns the subscription success response message to the NEF.

It should be noted that, in addition to the above contents, the present embodiment may further include the technical features described in the above embodiments, to further achieve the technical effects of the event monitoring methods shown above, for which reference may be made to the foregoing related description, and which, for brevity, are not repeated here.

According to the event monitoring methods provided in the embodiments of the present disclosure, based on signaling analysis, the NEF re-triggers the subscription request upon receiving a CN type change notification during 4G-5G network switching. Therefore, the effectiveness and integrity of the AMF subscription record in the 4G-5G switching scene can be improved, and the complexity of obtaining the AMF subscription record is reduced. The accuracy of monitoring events is improved, and the user requirements can be better satisfied. In addition, the method is implemented based on the original subscription and notification procedures, with subscription data directly obtained from the NEF without relying on new attributes at the UDM and the AMF, thereby ensuring the integrity and accuracy of the subscription data.

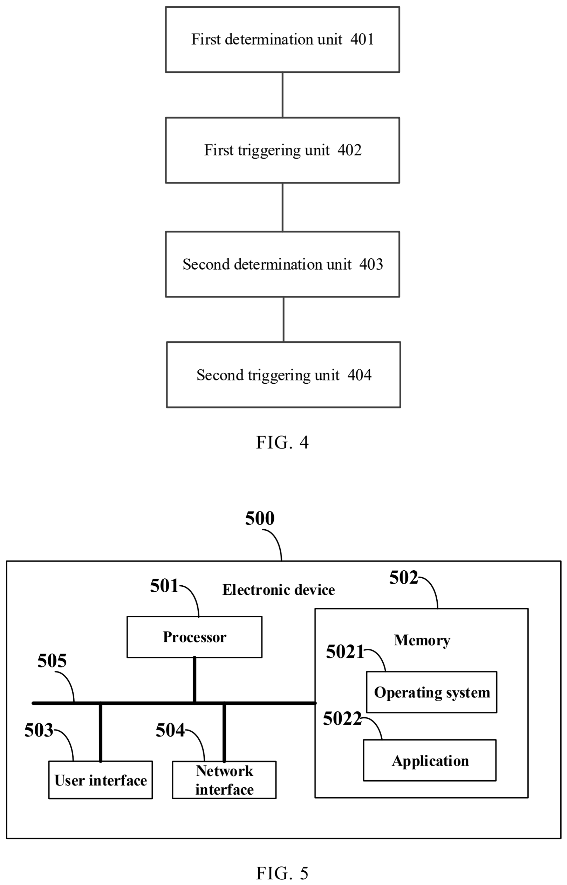

FIG. 4 is a schematic structural diagram of an event monitoring apparatus according to an embodiment of the present disclosure. The event monitoring apparatus includes a first determination unit 401, a first triggering unit 402, a second determination unit 403, and a second triggering unit 404.

The first determination unit 401 is configured to determine whether a user equipment accesses a 5G network.

The first triggering unit 402 is configured to trigger a first subscription request when it is determined that the user equipment accesses the 5G network, where the first subscription request carries a network switching monitoring event.

The second determination unit 403 is configured to determine whether the user equipment has performed target network switching, where the target network switching indicates that the user equipment switches from a 4G network to the 5G network.

The second triggering unit 404 is configured to trigger a second subscription request when the user equipment has performed the target network switching, and send, when event information corresponding to the second subscription request is detected, the event information corresponding to the second subscription request to the user equipment.

In one possible implementation, before determining whether the user equipment has performed target network switching, the apparatus further includes: a third determination unit (not shown) configured to determine registration information of the user equipment.

The second determination unit 403 is further configured to: determine, based on the registration information, whether the user equipment has performed target network switching.

In one possible implementation, the third determination unit is further configured to: receive a location update request of the user equipment; store 4G registration information corresponding to the location update request; receive a 5G registration request of the user equipment; and store 5G registration information corresponding to the 5G registration request.

In one possible implementation, determining, based on the registration information, whether the user equipment has performed target network switching includes: determining, based on the 4G registration information and the 5G registration information, whether the user equipment has performed target network switching.

In one possible implementation, determining, based on the 4G registration information and the 5G registration information, whether the user equipment has performed target network switching includes: determining whether a first saving moment is before a second saving moment to obtain judgment information, where the first saving moment is a saving moment of the 4G registration information, and the second saving moment is a saving moment of the 5G registration information; and under a condition that the judgment information indicates that the first saving moment is before the second saving moment, determining that the user equipment has performed target network switching.

In one possible implementation, the 4G registration information and the 5G registration information are stored with a first network element; and under a condition that the user equipment has performed the target network switching, the apparatus further includes: a first control unit (not shown) configured to control the first network element to send a notification message to a second network element, where the notification message carries information indicating that the user equipment has switched from the 4G network to the 5G network; and a second control unit (not shown) configured to control the second network element to return a success response message for the notification message to the first network element.

In one possible implementation, the second triggering unit 404 is further configured to: control the second network element to trigger the second subscription request, where the second subscription request carries an event monitored in the 4G network; control the second network element to send the second subscription request to the first network element; and after the first network element forwards the second subscription request to a third network element, receive a success response message returned from the third network element for the second subscription request.

In one possible implementation, the second triggering unit 404 is further configured to: control a third network element to detect event information corresponding to the second subscription request; store the event information in the third network element; and control the third network element to notify the user equipment of the event information.

The event monitoring apparatus provided in this embodiment may be the event monitoring apparatus shown in FIG. 4, and may perform all the operations of the above event monitoring methods to further achieve the technical effects of the above event monitoring methods, for which reference may be made to the foregoing description, and which, for brevity, are not repeated here.

FIG. 5 is a schematic structural diagram of an electronic device according to an embodiment of the present disclosure. The electronic device 500 shown in FIG. 5 includes: at least one processor 501, a memory 502, at least one network interface 504, and other user interfaces 503. The various components in the electronic device 500 are coupled together via a bus system 505. It is to be understood that the bus system 505 is configured to enable connective communication among these components. The bus system 505 includes, in addition to a data bus, a power bus, a control bus, and a status signal bus. However, for clarity of illustration, the various buses are shown jointly in FIG. 5 as the bus system 505.

The user interface 503 may include a display, a keyboard or a clicking device (e.g. a mouse, a trackball, a touchpad, or a touch screen, among others).

It is to be understood that the memory 502 in the embodiment of the present disclosure may be either a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM) used as an external cache. By way of example, but not limitation, many forms of RAMs are available, such as a static random access memory (SRAM), a dynamic random access memory (DRAM), a synchronous dynamic random access memory (SDRAM), a double data rate synchronous dynamic random access memory (DDRSDRAM), an enhanced synchronous SDRAM (ESDRAM), a synchronous link DRAM (SLDRAM), and a direct Rambus RAM (DRRAM). The memory 502 described herein is intended to include, without being limited to, these and any other suitable types of memories.

In some implementations, the memory 502 stores elements as follows: executable units or data structures, or subsets thereof, or extended sets thereof, and an operating system 5021 and an application 5022.

The operating system 5021 includes various system programs, such as a framework layer, a core library layer, a driving layer, so as to implement various basic services and process hardware-based tasks. The application 5022 includes various applications such as a media player and a browser, which are configured to implement various application services. A program for implementing the methods in the embodiments of the present disclosure may be included in the application 5022.

In this embodiment, by calling the program or instruction stored in the memory 502, which may be specifically a program or instruction stored in the application 5022, the processor 501 is configured to execute the method operations provided in the method embodiments, for example, including: determining whether a user equipment accesses a 5G network; triggering a first subscription request when it is determined that the user equipment accesses the 5G network, where the first subscription request carries a network switching monitoring event; determining whether the user equipment has performed target network switching, where the target network switching indicates that the user equipment switches from a 4G network to the 5G network; and triggering a second subscription request when the user equipment has performed the target network switching, and sending, when event information corresponding to the second subscription request is detected, the event information corresponding to the second subscription request to the user equipment.

The method disclosed in the embodiments of the present disclosure may be applied to or implemented by the processor 501. The processor 501 may be an integrated circuit chip capable of signal processing. In implementation, various operations of the method may be implemented by integrated logic circuits of hardware or instructions in the form of software in the processor 501. The processor 501 may be a digital signal processor (DSP), an application specific integrated circuit (ASIC), a field programmable gate array (FPGA) or other programmable logic devices, discrete gates or transistor logic devices, or discrete hardware components that may implement or perform the methods, operations, and logic blocks in embodiments of the present disclosure. The various methods, operations, and logic blocks disclosed in the embodiments of the present disclosure may be implemented or performed. The general purpose processor may be a microprocessor or the processor may be any conventional processor or the like. The operations of the method disclosed in the embodiments of the present disclosure may be directly implemented by a hardware decoding processor, or implemented by a combination of hardware and software units in the decoding processor. The software unit may be located in a storage medium well known in the art, such as an RAM, a flash, an ROM, a PROM or EPROM, a register, or the like. The storage medium is located in the memory 502, and the processor 501 reads information from the memory 502 to complete the steps of the method in combination with hardware thereof.

It is to be understood that the embodiments described herein may be implemented in hardware, software, firmware, middleware, microcode, or any combination thereof. For a hardware implementation, the processing unit may be implemented by one or more application specific integrated circuits (ASICs), digital signal processors (DSPs), digital signal processing devices (DSPDs), programmable logic devices (PLDs), field programmable gate arrays (FPGAs), general purpose processors, controllers, microcontrollers, microprocessors, other electronic units for executing the functions of the present disclosure, or a combination thereof.

For a software implementation, the techniques described herein may be implemented by means of units performing the functions described herein. Software codes may be stored in a memory and executed by a processor. The memory may be implemented inside or outside of the processor.

The electronic device provided in this embodiment may be an electronic device shown in FIG. 5, and may perform all the operations of the above event monitoring methods to further achieve the technical effects of the above event monitoring methods, for which reference may be made to the foregoing description, and which, for brevity, are not repeated here.

An embodiment of the present disclosure further provides a storage medium (computer-readable storage medium). The storage medium has one or more programs stored thereon. The storage medium may include a volatile memory, such as a random access memory. The memory may include a non-volatile memory, such as a read only memory, a flash memory, a hard disk, or a solid state disk. The memory may include a combination of memories as described above.

The one or more programs on the storage medium may be executed by one or more processors to implement the event monitoring method performed at the electronic device side.

The processor is configured to execute an event monitoring program stored in the memory to implement the following operations of the event monitoring method performed at the electronic device side: determining whether a user equipment accesses a 5G network; triggering a first subscription request when it is determined that the user equipment accesses the 5G network, where the first subscription request carries a network switching monitoring event; determining whether the user equipment has performed target network switching, where the target network switching indicates that the user equipment switches from a 4G network to the 5G network; and triggering a second subscription request when the user equipment has performed the target network switching, and sending, when event information corresponding to the second subscription request is detected, the event information corresponding to the second subscription request to the user equipment.

Those skilled in the art will further appreciate that the units and algorithm operations of various examples described in combination with the embodiments disclosed herein may be implemented as electronic hardware, computer software, or a combination of the two, and that the components and operations of the various examples have been described above generally in terms of their functionality to clearly illustrate the interchangeability of hardware and software. Whether such functionality is implemented as hardware or software depends on the particular application and design constraints imposed on the technical solution. Those skilled in the art may implement the described functionality in varying ways for each particular application, but such implementations should not be interpreted as departing from the scope of the present disclosure.

The operations of the method or algorithm described in combination with the embodiments disclosed herein may be embodied in hardware, a software module executed by a processor, or a combination of the two. A software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

It is to be understood that the terminology used herein is for the purpose of describing particular exemplary implementations only and is not intended to be limiting. As used herein, the singular forms "a", "an" and "the" are intended to include the plural forms as well, unless the context clearly indicates otherwise. The terms "comprise", "comprising", "include", and "including" are inclusive and therefore specify the presence of the stated features, steps, operations, elements, and /or components, but do not preclude the presence or addition of one or more other features, steps, operations, elements, components, and /or groups thereof. The method steps, processes, and operations described herein are not to be construed as necessarily requiring their performance in the particular order discussed or illustrated, unless specifically identified as an order of performance. It should also be understood that additional or alternative operations may be used.

The above description is given merely for the purpose of describing specific implementations of the present disclosure, so as to enable those skilled in the art to understand or implement the present disclosure. Various modifications to these embodiments will be readily apparent to those skilled in the art, and the general principles defined herein may be applied to other embodiments without departing from the spirit or scope of the present disclosure. Therefore, the present disclosure is not intended to be limited to the embodiments shown herein, but is to be accorded the widest scope consistent with the principles and novel features disclosed herein.

## Claims

1. An event monitoring method, comprising:
determining whether a user equipment accesses a 5G network;
triggering a first subscription request when it is determined that the user equipment accesses the 5G network, wherein the first subscription request carries a network switching monitoring event;
determining whether the user equipment has performed target network switching, wherein the target network switching indicates that the user equipment switches from a 4G network to the 5G network; and
triggering a second subscription request when the user equipment has performed the target network switching, and sending, when event information corresponding to the second subscription request is detected, the event information to the user equipment.

2. The method according to claim 1, wherein before determining whether the user equipment has performed target network switching, the method further comprises:
determining registration information of the user equipment, and
wherein determining whether the user equipment has performed target network switching comprises:
determining, based on the registration information, whether the user equipment has performed target network switching.

3. The method according to claim 2, wherein determining registration information of the user equipment comprises:
receiving a location update request of the user equipment;
storing 4G registration information corresponding to the location update request;
receiving a 5G registration request of the user equipment;
storing 5G registration information corresponding to the 5G registration request, and
wherein determining, based on the registration information, whether the user equipment has performed target network switching comprises:
determining, based on the 4G registration information and the 5G registration information, whether the user equipment has performed target network switching.

4. The method according to claim 3, wherein determining, based on the 4G registration information and the 5G registration information, whether the user equipment has performed target network switching comprises:
determining whether a first saving moment is before a second saving moment to obtain judgment information, wherein the first saving moment is a saving moment of the 4G registration information, and the second saving moment is a saving moment of the 5G registration information; and
under a condition that the judgment information indicates that the first saving moment is before the second saving moment, determining that the user equipment has performed target network switching.

5. The method according to claim 3, wherein the 4G registration information and the 5G registration information are stored with a first network element, and
wherein under a condition that the user equipment has performed the target network switching, the method further comprises:
controlling the first network element to send a notification message to a second network element, wherein the notification message carries information indicating that the user equipment has switched from the 4G network to the 5G network; and
controlling the second network element to return a success response message for the notification message to the first network element.

6. The method according to claim 5, wherein triggering the second subscription request comprises:
controlling the second network element to trigger the second subscription request, wherein the second subscription request carries an event monitored in the 4G network;
controlling the second network element to send the second subscription request to the first network element; and
after the first network element forwards the second subscription request to a third network element, receiving a success response message returned from the third network element for the second subscription request.

7. The method according to any one of claims 1 to 6, wherein sending the event information corresponding to the second subscription request to the user equipment comprises:
controlling a third network element to detect event information corresponding to the second subscription request;
storing the event information in the third network element; and
controlling the third network element to notify the user equipment of the event information.

8. An event monitoring apparatus, comprising:
a first determination unit configured to determine whether a user equipment accesses a 5G network;
a first triggering unit configured to trigger a first subscription request when it is determined that the user equipment accesses the 5G network, wherein the first subscription request carries a network switching monitoring event;
a second determination unit configured to determine whether the user equipment has performed target network switching, wherein the target network switching indicates that the user equipment switches from a 4G network to the 5G network; and
a second triggering unit configured to trigger a second subscription request when the user equipment has performed the target network switching, and send, when event information corresponding to the second subscription request is detected, the event information to the user equipment.

9. An electronic device, comprising:
a memory configured to store a computer program; and
a processor configured to execute the computer program stored in the memory to implement the method according to any one of claims 1 to 7.

10. A computer-readable storage medium having a computer program stored thereon which, when executed by a processor, causes the method according to any one of claims 1 to 7 to be implemented.
